# EUROPEAN PATENT APPLICATION

(11) **EP 1 008 562 A2**
(43) Date of publication of application: **14.06.2000**
(21) Application number: 99309915.9
(22) Date of filing: 09.12.1999
(51) Int. Cl.: C03B 11/08

(54) **Method and apparatus for press molding a glass product**

(30) Priority: 09.12.1998 JP 35015598
(71) Applicant: HOYA CORPORATION, Shinjuku-ku Tokyo (JP)
(72) Inventor: Murakami, Akira, Akiruno-shi, Tokyo (JP); Shimokawa, Takahiro, Fussushi, Tokyo (JP); Saito, Jun, Tachikawa-shi, Tokyo (JP)
(74) Representative: Cozens, Paul Dennis

(57) **Abstract**

A method comprises the step of supplying a molten glass onto a molding surface of a lower die, the step of controlling the temperature of the glass supplied onto the molding surface of the lower die so that an inner part of the glass and an outer peripheral part of the glass are close in temperature to each other, and the step of pressing the glass by the molding surfaces of the lower die and a molding surface of an upper die when the glass controlled in temperature has a viscosity within a range between 10^{3.5} and 10^{6.5} poises (dPa^{.}s). By making the temperatures of the inner and the outer peripheral parts of the glass close to each other before pressing and by pressing the glass at such a relatively high viscosity, it is possible to reduce heat shrinkage of the glass after pressing and to reduce the difference in heat shrinkage between the inner and the outer peripheral parts of the glass. Thus, occurrence of sink marks on a glass surface is suppressed.

## Description

### Background of the Invention:

This invention relates to a method and an apparatus for press molding a glass product which are adapted to mold an optical lens blank and, in particular, to a method and an apparatus of a so-called direct press system in which a molten glass is supplied to a mold to be pressed in the mold.

As a method of molding an unfinished glass product (hereinafter called a lens blank) as a state before it is ground and polished into a finished or final glass product such as an optical lens, use has widely been made of a direct press system excellent in productivity. In the direct press system, a glass material is melted in a furnace into a molten glass. An appropriate amount of the molten glass is cut off by the use of a cutter such as a shear to be supplied onto a lower die (drag). The molten glass supplied onto the lower die forms a glass gob of a generally marble-like shape under the effect of its surface tension. The lower die with the glass gob supplied thereon is transferred by a conveying arrangement such as a turntable to a position where an upper die (cope) is arranged. Then, the glass gob is pressed by the upper and the lower dies to obtain a pressed product as the above-mentioned lens blank having a shape matching the configuration of a cavity surrounded by the upper and the lower dies. In a grinding/polishing step subsequently carried out, the surface of the lens blank is ground and polished to produce a final product such as a spectacle lens, a camera lens, and an optical pickup lens.

On the other hand, it is recently pointed out that grinding and polishing scraps produced in the grinding/polishing step have an adverse influence upon the environment. Taking this into account, it is strongly desired to mold the lens blank which will require only a small grinding allowance so as to reduce the grinding and polishing scraps.

In the molding of the lens blank by the use of the existing direct press system, however, it is impossible to considerably reduce the grinding allowance of the glass. Specifically, in the existing direct press system, so-called sink marks are distributed on a glass surface due to shrinkage of the glass after the molten glass is pressed. Upon pressing the molten glass, an outer peripheral part of the molten glass is cooled by external air after the molten glass is supplied to the lower die and before it is pressed by the upper and the lower dies. Therefore, the temperature of the molten glass is remarkably lowered in the outer peripheral part as compared with its inner part. If the temperature of the outer peripheral part becomes lower than a certain temperature, the flowability of the glass is decreased. Taking this into consideration, it is necessary to press the molten glass before the temperature of the inner part of the molten glass is sufficiently cooled, i.e., while the viscosity of the glass is as low as about 10³ poises (dPa·s). This results in an increase in heat shrinkage of the inner part of the glass after pressing and in occurrence of sink marks due to the temperature difference between the inner part and the outer peripheral part. The occurrence of sink marks deteriorates a reproducibility in transferring the shape of a molding surface of the mold and therefore requires a grinding allowance greater than that required in other molding methods. In case where the sink marks produced on the glass surface after pressing are not uniformly distributed but concentrated to a local area, a much greater grinding allowance is inevitably required.

In order to suppress the occurrence of sink marks, various proposals have been made (see Japanese Unexamined Patent Publications (JP-A) Nos. 10-101347, 6-32624, 6-72725, 6-157051, and 63-162539). However, no disclosure is made about a technique for effectively reducing the temperature difference between the inner part and the outer peripheral part of the molten glass, which results in occurrence of sink marks.

### Summary of the Invention:

It is therefore an object of this invention to provide, in molding of a glass product in a so-called direct press system, a method and an apparatus for molding an unfinished glass product which requires a reduced grinding allowance by significantly reducing the temperature difference between inner and outer peripheral parts of a molten glass to effectively suppress occurrence of sink marks on a glass surface after a pressing step.

It is another object of this invention to provide a method and an apparatus for molding a glass product, which are capable of suppressing occurrence of sink marks concentrated to a local area of a glass surface.

It is still another object of this invention to provide a method and an apparatus for molding a glass produce, which are capable of suppressing occurrence of sink marks without decreasing a productivity attained in a direct press system.

According to this invention, a method of press-molding a glass product by the use of a mold composed of an upper die and a lower die, each of the upper and the lower dies having a molding surface, comprises at least the following steps. Specifically, the method comprises a supplying step of supplying a molten glass onto the molding surface of the lower die, a temperature controlling step of controlling the temperature of the glass supplied onto the molding surface of the lower die so that an inner part of the glass and an outer peripheral part of the glass are close in temperature to each other, and a pressing step of pressing the glass by the molding surfaces of the upper and the lower dies when the glass controlled in temperature has a viscosity within a range between 10^{3.5} and 10^{6.5} poises (dPa·s) or between 10⁴ and 10⁶ poises (dPa·s), preferably between 10^{4.5} and 10^{5.5} poises (dPa·s). By making the temperatures of the inner and the outer peripheral parts of the glass close to each other before pressing and by pressing the glass at such a relatively high viscosity, it is possible to reduce heat shrinkage of the glass after pressing and to reduce the difference in heat shrinkage between the inner and the outer peripheral parts of the glass. Thus, occurrence of sink marks on a glass surface is suppressed.

In order to achieve a high precision of precision press-molding in which the shape and the surface accuracy of the mold is transferred to a softened glass, the above-mentioned method is modified in the following manner. Specifically, a time period required in a reheat pressing step is prolonged to further lower the temperature of the inner part of the glass so that the temperature distribution is reversed, i.e., the temperature of the inner part is lower than that of the outer peripheral part. Then, press-molding is carried out when the viscosity of the glass falls within a range between 10⁷ and 10⁹ poises (dPa·S). In this manner, a pressed product or a lens blank is further improved in shape accuracy. Therefore, at least spherical grinding for obtaining a radius of curvature R is not required.

In the above-mentioned approach, however, the productivity is significantly decreased. Therefore, the productivity attained in the direct press system can no longer be assured.

In view of the above, it is preferable in this invention to simply reduce the temperature difference between the inner and the outer peripheral parts of the molten glass without reversing the temperature distribution of these parts.

By grinding and polishing the surface of the glass molded by the above-mentioned press-molding method, a final glass product is obtained. The temperature difference between the inner and the outer peripheral parts is equal to 100 °C or less, preferably 50 °C or less, more preferably 30 °C or less.

In this invention, the temperature controlling step prior to the pressing step may be a direct control, for example, by bringing a cooling member into contact with the molten glass or may be an indirect control, for example, by locating a heat source in the vicinity of the molten glass.

Preferably, the temperature controlling step is a step of making the temperatures of the inner and the outer peripheral parts of the glass close to each other by lowering the temperature of the inner part of the glass and elevating the temperature of the outer peripheral part of the glass.

In one aspect, the temperature controlling step includes a cooling step of cooling the glass from the side of the upper die and a heating step of heating the glass from the side of the upper die after the cooling step.

In this case, the cooling step may include the step of bringing a heat absorber into contact with an upper surface of the glass, which is faced to the upper die, for a predetermined time period to absorb the heat therefrom. Prior to contact with the glass, the heat absorber is preferably kept at an atmospheric temperature at a position remote from the neighborhood of the glass.

The heating step may include the step of locating a heat source in the vicinity of an upper surface of the glass, which is faced to the upper die, for a predetermined time period.

The method further comprises the step of taking the glass out of the mold when the temperature of the inner part of the glass falls within a range between ±50 °C, preferably ±10 °C, with respect to its transition point.

Preferably, a plurality of lower dies are transferred successively to operating positions for the above-mentioned steps to carry out the above-mentioned steps.

Preferably, a plurality of lower dies are arranged on a turntable in a circumferential direction and transferred by the rotation of the turntable successively to the operating positions for the above-mentioned steps to carry out the above-mentioned steps.

Preferably, the glass product is an optical lens material.

According to this invention, an apparatus for press-molding a glass product comprises a mold composed of an upper die and a lower die, each of the upper and the lower dies having a molding surface, supplying means for supplying a molten glass onto the molding surface of the lower die, temperature control means for controlling the temperature of the glass supplied onto the molding surface of the lower die so that an inner part of the glass and an outer peripheral part of the glass are close in temperature to each other, and mold driving means for making the molding surfaces of the upper and the lower dies approach each other to press the glass. When the glass controlled in temperature by the temperature controlling means has a viscosity within a range between 10^{3.5} and 10^{6.5} poises (dPa·s) or between 10⁴ and 10⁶ poises (dPa·s), preferably between 10^{4.5} and 10^{5.5} poises (dPa·s), the mold driving means is activated to press the glass. In this case, the press pressure is within a range between 30 and 80 kgf/cm², preferably between 50 and 70 kgf/cm².

Preferably, the temperature control means comprises cooling means for cooling the glass from the side of the upper die and heating means for heating the glass from the side of the upper die after cooling by the cooling means.

Preferably, the apparatus further comprises conveying means, such as a turntable, for transferring the lower die with the glass supplied onto the molding surface thereof successively to positions where the cooling means, the heating means, and the mold driving means are installed, respectively.

### Brief Description of the Drawing:

Fig. 1 is a view showing a turntable with a plurality of operating positions for a plurality of steps in a method according to this invention;
Figs. 2A through 2D are schematic diagrams for describing a part of the steps in the method according to this invention;
Figs. 3A through 3D are schematic diagrams for describing a remaining part of the steps;
Figs. 4A and 4B are views for describing the step of preliminarily applying boron nitride (BN) onto a molding surface of a lower die in the method of this invention; and
Fig. 5 is a view for describing the method of this invention with reference to temperature conditions of inner and outer peripheral parts of the glass after a glass gob is supplied onto a lower die and before the lens blank is taken out.

### Description of the Preferred Embodiment:

Now, description will be made about one embodiment of this invention with reference to the drawing. In the following, description is directed to a method of molding an optical lens blank by the use of a press-molding apparatus comprising a turntable as a conveying arrangement and sixteen lower dies arranged on the turntable in a circumferential direction. Upon referring to the temperature of a glass, a region of the glass contacting a molding surface of the lower die and its neighborhood will be referred to as a lower part of the glass while another region exposed to external air without contacting the molding surface of the lower die and its neighborhood will be referred to as a upper part of the glass.

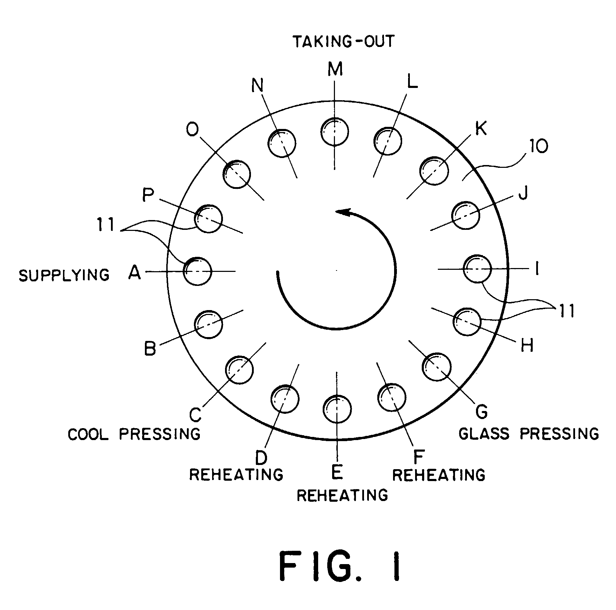

Referring to Fig. 1, a plurality of operating positions A through P for respective steps of the press-molding method of this invention are defined on a turntable 10. As illustrated in the figure, a plurality of lower dies 11, sixteen in number, are arranged on the turntable 10 in a circumferential direction. Energized by a driving unit (not shown), the turntable 10 is rotated stepwise to transfer the lower dies 11 to the operating positions A through P for the respective steps. Specifically, the turntable 10 is rotated from a stationary or rest state by a 1/16 circle (i.e., a degree of 22.5° ) to transfer each lower die 11 from one operating position to a next operating position where the turntable 10 is stopped to return to the stationary state. For a predetermined time period corresponding to an operating time of each step, the lower die 11 rests on each operating position and is transferred to the next operating position after lapse of the predetermined time period. For example, a time interval between one stationary state and a next following stationary state, i.e., one pitch period ranges between 2 and 6 seconds.

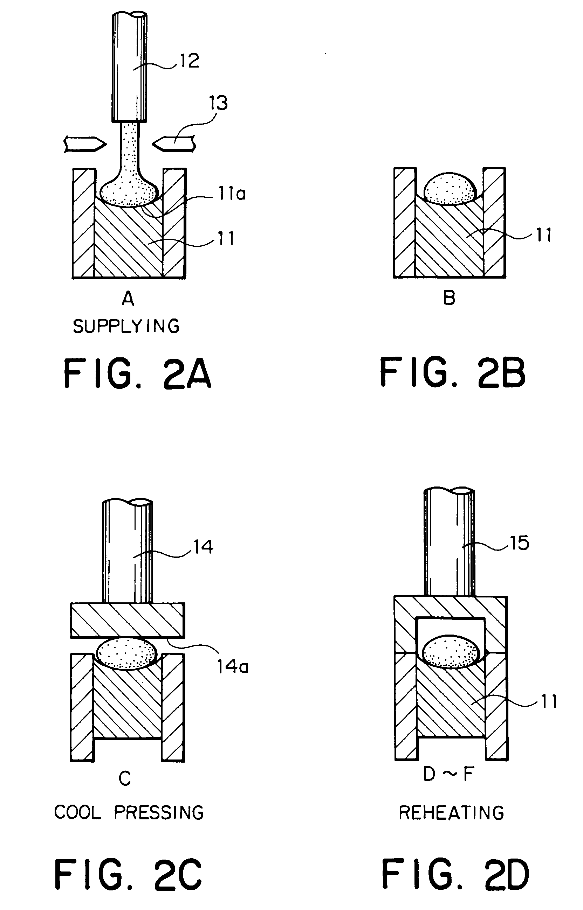

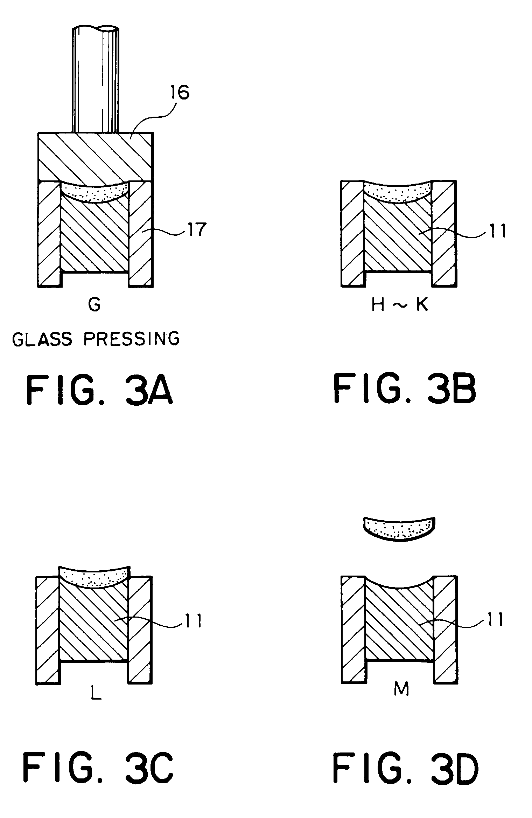

The press-molding method of this invention comprises the step of supplying a molten glass (hereinafter called a glass supplying step), the step of controlling the temperature of the glass before pressing (hereinafter called a temperature-controlling step), the step of pressing the glass into a pressed glass (hereinafter called a glass pressing step), and the step of removing the pressed glass from the mold (hereinafter called a glass removing step). The temperature-controlling step comprises the step of pressing the glass in order to cool the glass (hereinafter called a cool pressing step) and three reheating steps of reheating the glass (hereinafter called reheating steps). In Figs. 2A through 2D and 3A through 3D, the glass is molded through the above-mentioned steps. In these figures, the operating positions A through P and the names of the steps are indicated in correspondence to those illustrated in Fig. 1.

The glass supplying step is carried out in the position A in Fig. 1. Above the position A, a glass melting furnace (not shown) is arranged as well as a shear 13 (Fig. 2A) for cutting the molten glass flowing down from the glass melting furnace. A glass material adapted to a desired optical lens is supplied to the melting furnace and heated in the melting furnace to obtain the molten glass kept at a temperature between 1000 and 1100 °C. In this embodiment, use is made of an SiO₂-TiO₂ glass having a glass transition point (Tg) of 615 °C and a softening point (Ts) of 650 °C. As illustrated in Fig. 2A, the molten glass is made to flow down through a platinum pipe 12 towards the lower die 11 at the position A. Taking into account a flow rate, the molten glass is cut by the shear 13 at a predetermined time interval to supply an appropriate amount of the molten glass onto a molding surface lla of the lower die 11. The molten glass on the molding surface lla is rounded by its surface tension to become a marble-like shape called a glass gob.

Alternatively, the glass gob may be supplied onto the lower die 11 without using the shear 13. Specifically, the lower die 11 is elevated to approach an outlet of the platinum pipe 12 through which the molten glass is supplied. When a predetermined amount of the molten glass is supplied onto the molding surface lla of the lower die 11, the lower die 11 is moved down. The molten glass supplied onto the lower die 11 is pulled down by its own weight and the downward movement of the lower die 11 to be partially separated from a continuous supply flow of the molten glass. The molten glass received on the lower die 11 is rounded by its surface tension to become the glass gob. In this technique of supplying the molten glass onto the lower die 11 without using the shear 13, a cutting mark called a shear mark by the shear 13 is not left on the surface of the glass gob. This advantageously reduces a finishing allowance which will later be described.

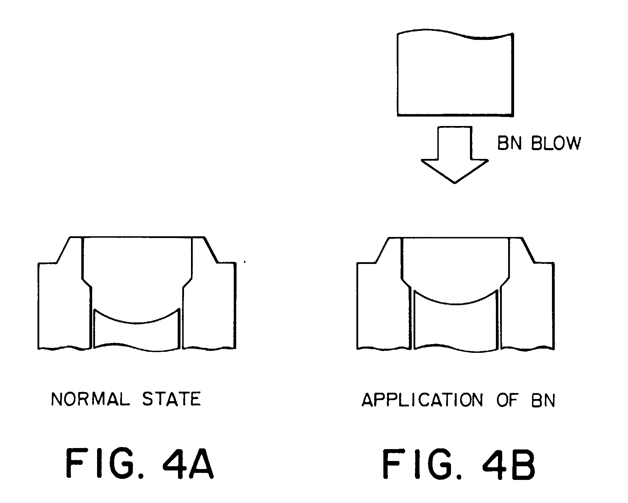

At the position P prior to supply of the molten glass onto the lower die 11, heat-resistant solid lubricant powder of hexagonal BN (boron nitride) or the like is sprayed towards the lower die 11 together with a spray gas to be adhered onto the molding surface lla in order to improve a releasability of the glass gob from the lower die 11. In this event, it is preferred that a body die defining an outer diameter of the glass gob has an inner wall having a chamfered portion as illustrated in Fig. 4A.

The method of this invention requires a higher shape accuracy than that in the existing direct press system. Therefore, in order to avoid center axis inclination that the centers of upper and lower surfaces of the glass gob are offset as a result of inclination of the lower die, a gap between the body die and the lower die is narrower than that in the existing direct press system. Therefore, when the lower die is elevated to receive the molten glass on the lower die, hexagonal BN adhered to the inner surface of the body die is peeled off and accumulated on the molding surface of the lower die. Such accumulation of hexagonal BN results in a surface defect, i.e., so-called stones, on the lower surface of the glass gob. This is a factor to increase a grinding allowance.

In view of the above, the chamfered portion is formed on the inner wall surface of the body die so that the body die has two different inner diameters, as illustrated in Fig. 4A. When hexagonal BN is applied, the molding surface of the lower die is located at a level of the chamfered portion, as illustrated in Fig. 4B. In this event, no hexagonal BN is adhered to the inner wall surface of the body die in an area having a smaller diameter. Therefore, when the lower die is elevated from a normal state illustrated in Fig. 4A along the inner wall surface of the body die in order to receive the molten glass onto the lower die, no hexagonal BN is peeled off by the lower die.

Referring to Fig. 1, heating is carried out over a substantially entire area of the turntable 10 so that the lower die 11 in the position A is kept at a predetermined temperature. The temperature control of the lower die upon supply of the glass is important in order to prevent early solidification due to a low temperature of the lower part of the glass gob and resultant loss of flowability and to prevent fusion bonding of the molten glass to the lower die due to a high temperature of the lower part of the glass gob. As will later be described, when the molten glass is supplied onto the molding surface of the lower die, the lower part of the glass is rapidly cooled by heat exchange between the lower part of the glass and the molding surface of the lower die. In order to avoid the two contradictory problems mentioned above, the lower part of the glass gob supplied to the molding surface of the lower die is preferably kept at a temperature slightly lower than the transition point (Tg) of the glass, i.e., at a temperature between Tg and Tg - 50 °C, preferably between Tg - 30 °C, more preferably between Tg and Tg - 10 °C. In the embodiment, the lower die is heated to a temperature of Tg - 10 °C so that the temperature of the lower die after supply of the molten glass and the temperature of the lower part of the molten glass are kept in an equilibrium at a level slightly lower than the transition point Tg.

The lower die 11 supplied with the glass gob at the position A is transferred by two-step rotation of the turntable 10 to the position C for the cool pressing step. At the position C, a cool press unit is arranged to carry out the cool pressing step. As illustrated in Fig. 2C, the cool press unit comprises a press member 14 made of a metal material and having a flat contact surface 14a to be contacted with the glass gob. The press member 14 is moved up and down by an elevating unit (not shown). When the turntable 10 is rotated and the lower die with the glass gob received thereon is transferred to the position C, the elevating unit is driven to move down the press member 14. By the downward movement of the press member 14, the contact surface 14a is pressed against the upper part of the glass gob to slightly deform the glass gob. Thus, face contact between the upper part of the glass gob and the contact surface 14a of the press member 14 is achieved. Prior to the contact with the glass gob, the press member 14 and the contact surface 14a are kept at a room temperature. By maintaining the contact between the glass gob and the contact surface 14a of the press member 14 for a preselected time duration, the heat of the glass gob, in particular, the heat of the upper part thereof is transferred to the press member 14. As a result, the temperature of the glass gob, in particular, the temperature of the upper part of the glass gob is quickly lowered. In the embodiment, the press member 14 is made of iron (having a heat conductivity between 40 and 50 kcal/m·hr·deg). Alternatively, use may be made of other metal materials such as stainless steel (having a heat conductivity between 40 and 50 kcal/m·hr·deg). In case where the press member 14 has a relatively low heat conductivity, the cooling effect is reduced but the temperature control is advantageously easy. In order to optimize the temperature condition of the glass after the cool press step, selection is appropriately made of the metal material of the press member 14, the contact area between the glass and the press member 14, the contact time of contact between the glass and the press member 14, and the press stroke. If the press member 14 is brought into contact with the glass gob under a predetermined pressure, production of wrinkles on the lower surface of the glass gob, i.e., the surface contacting the lower die, is suppressed as a subsidiary effect. These wrinkles are called gob lines which result in surface defect on the lower surface of the glass gob and in increase of the grinding allowance.

In the cool press step mentioned above, the press member may have a molding surface similar in shape to the molding surface of the upper die which is used in the glass press step carried out later. In this event, the cool press step also serves as a preliminary press step. By carrying out the preliminary press step prior to the glass press step, the reproducibility of the glass with respect to the mold in the glass press step is further improved.

After the cool press step, the glass gob is transferred to the reheating steps. In this embodiment, the reheating steps are intermittently carried out three times at the positions D, E, and F in Fig. 1. The reheating steps serve to reheat the glass gob once cooled in the cool press step previously carried out. In order to carry out the reheating steps, heater units are arranged at the positions D, E, and F. Each of the heater units comprises a heater member 15 illustrated in Fig. 2D and an elevating unit (not shown) for moving up and down the heater member 15 between an elevated position and a lowered position. In the lowered position, a lower end of the heater member 15 covers the upper half of the glass gob. The heater member 15 has a coil as a heat source arranged on the inner peripheral wall of the heater member 15 at its lower end. The coil is heated to a temperature between 800 and 1200 °C to generate radiation heat by which the glass gob is heated from its upper part.

The cool press step and the three reheating steps mentioned above serve to optimize the temperature conditions and the viscosity of the glass gob when the glass gob is pressed in the glass press step subsequently carried out and after the glass press step. Specifically, through the cool press step and the reheating steps prior to the glass press step, the temperature of the glass gob is controlled so as to reduce the temperature difference between the inner and the outer peripheral parts thereof. The temperature control of the glass gob will later be described in detail. In this embodiment using the turntable, the operating time of each of the cool press step and the reheating steps is defined by a stop period of the turntable 10. In other words, the operations of lowering the press member 14 or the heater member 15, cooling or heating the glass gob, and retracting the press member 14 or the heater member 15 upward in each of the above-mentioned steps must be performed within the stop period of the turntable 10 repeating the stepwise rotation. In one embodiment, each of the cooling time by the press member 14 and the heating time by the heater member 15 is selected between 1 and 3 seconds.

The glass gob controlled in temperature in the cool press step and the reheating steps is thereafter transferred to the position G to be pressed (glass press step). As illustrated in Fig. 3A, an upper die 16 having a glass molding surface on its lower surface is used in the glass press step. Upon the glass gob transferred to the position G, the upper die 16 is moved down by an elevating unit (not shown) to press the glass gob. By this pressing operation, the glass gob is extended and spread within a cavity defined by the molding surfaces of the lower and the upper dies 11 and 16 to obtain a desired shape for the optical lens blank. The outer periphery of the lens blank is defined by a cylindrical body die 17 supporting the lower die 11 to be movable relative to the body die 17. The upper die 16 is kept at a predetermined temperature so as to avoid fusion bonding of the glass upon pressing and to control the temperature of the glass after pressing. To this end, the upper die 16 before pressing is preferably kept at a temperature within a range between Tg - 50 °C and Tg - 150 °C, preferably between Tg - 70 °C and Tg - 120 °C. In the embodiment, the upper die 16 before pressing is kept at a temperature of Tg - 100 °C.

In this invention, a timing of carrying out the glass press step is important. Specifically, the glass press step is carried out when the glass gob controlled in temperature via the cool press step and the reheating steps has an internal viscosity between 10^{3.5} and 10^{6.5} poises (dPa·s) or between 10⁴ and 10⁶ poises (dPa·s), preferably between 10^{4.5} and 10^{5.5} poises (dPa·s). In the embodiment, the glass press step is carried out at the viscosity of 10⁵ poises (dPa·s). In the glass press step, the glass gob is preferably kept at a temperature between Tg and Tg + 50 °C. In the embodiment, the glass gob is kept at a temperature of Tg + 10 °C. The above-mentioned viscosity is much higher than the viscosity between 10² and 10³ poises (dPa·s) upon pressing in the existing direct press system. The reason why the pressing is carried out at such a high viscosity is to suppress heat shrinkage of the glass after pressing and to reduce occurrence of sink marks on the glass surface. With reference to the transfer speed of the glass gob transferred by the turntable, it is possible to set an appropriate press timing by changing the operating position of the glass press step, for example, to the position H or I. In the glass press step mentioned above, the press pressure is equal to about six times that of the existing direct press system so as to completely roll the glass gob having a high viscosity within the cavity. The press pressure is between 30 and 80 kgf/cm², preferably between 50 and 70 kgf/cm². In the embodiment, the press pressure is approximately equal to 66 kgf/cm².

After the glass press step, the glass is transferred via the positions H through L to the position M where it is taken out. While the glass is transferred via the positions H through L to the position M, the glass is gradually spontaneously cooled by the atmospheric temperature so that the volume is slightly reduced by heat shrinkage. In the existing direct press system, the problem of sink marks occurs in the process of heat shrinkage of the glass gob after pressing. In this invention, the temperature difference between the inner and the outer peripheral parts of the glass is reduced by appropriate temperature control of the glass gob prior to the glass press step. As a result, the temperature difference between the inner and the outer peripheral parts of the glass upon and after pressing is also reduced so that the occurrence of sink marks is suppressed. However, if the glass is reheated so that the outer peripheral part of the glass is higher in temperature than the inner part, the productivity of the direct press system is decreased. Therefore, pressing is carried out when the temperature of the outer peripheral part of the glass is lower than that of the inner part. Preferably, the temperature difference between the inner part and the outer peripheral part of the glass is not wider than 100 °C, preferably not wider than 50 °C. In each of the positions H through M, the lower die 11 is gradually elevated with respect to the ring mold 17. As illustrated in Fig. 3C, the outer peripheral surface of the glass is located above the ring mold 17 at the position M. As illustrated in Fig. 3D, the glass is vacuum-sucked by a pickup unit (not shown) and taken out from the mold when the temperature of the inner part of the glass is within a range of ±50 °C, preferably ±30 °C, more preferably ±10 °C with respect to the transition point.

Thus, by the method of this invention, the optical lens blank is molded. The optical lens blank thus molded is subsequently subjected to surface grinding/polishing to produce an optical lens. The lens blank molded by the method of this invention has less sink marks on its surface and can therefore reduce the grinding allowance. The evaluation of the optical lens blank experimentally obtained according to this embodiment shows the following result. The grinding allowance could be reduced to 50% as compared with the existing system.

| | |
|---|---|
| One-Side Finishing Allowance | 0.3-0.35mm |
| Center Thickness Tolerance | 0.1mm |
| Outer Diameter | 0.1mm |
| Thickness Deviation | 150 µm or less |
| Accuracy in Radius of Curvature | 80 µm |
| Stones on Lower Surface of Pressed Product Pressed Product | 200 µm or less 200 µm or less |

Herein, the one-side finishing allowance is a grinding allowance in grinding the upper surface or the lower surface of the pressed product. The center thickness tolerance is a difference between a preselected center thickness and a measured center thickness. The thickness deviation is a difference between a maximum thickness and a minimum thickness on a common circumference. The accuracy in radius of curvature is a difference between a preselected radius of curvature and a measured radium of curvature. The stones on the lower surface of the pressed product are foreign matters such as BN described above.

In this embodiment, a plurality of the lower dies are arranged on the turntable. Alternatively, the conveying arrangement may be of any other type as far as the lower dies can be transferred successively to the positions for the respective steps and can be repeatedly used in a succession of the steps. For example, a linear conveyer such as a belt conveyor can be used.

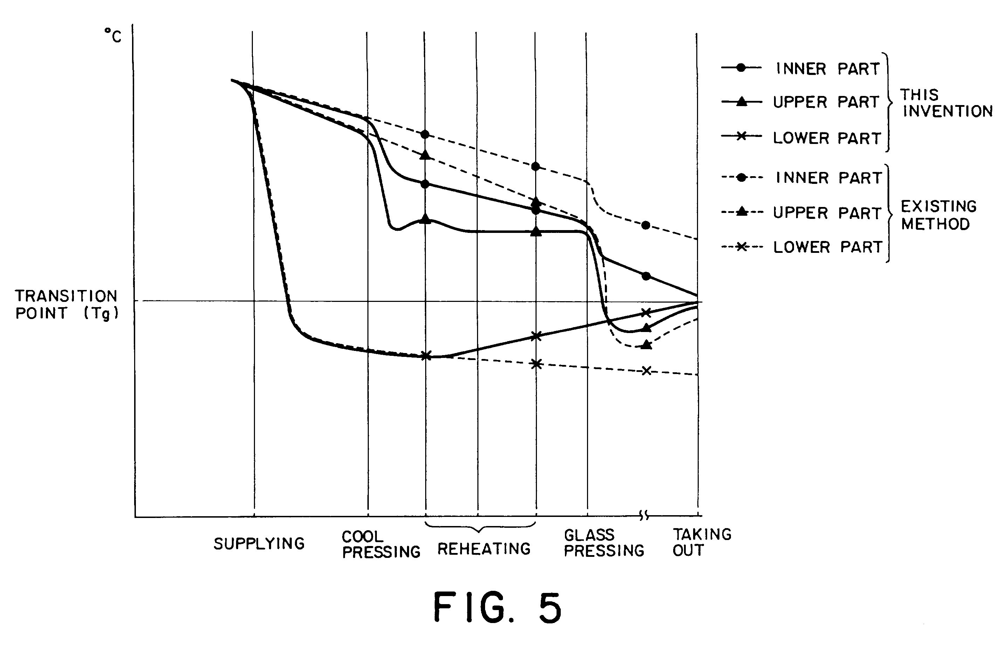

Next, description will be made about the temperature conditions of the molten glass in the respective steps. Referring to Fig. 5, the glass has different temperature conditions in the inner and the outer peripheral parts of the glass after the glass gob is supplied onto the lower die and before the lens blank is taken out. In the figure, the temperature variations of the glass in the upper, the inner, and the lower parts in the method of this invention are depicted by solid lines. On the other hand, the temperature variations of the glass in the upper, the inner, and the lower parts in the existing direct press system without the cool press step and the reheating steps are depicted by broken lines in the figure.

Prior to description of the temperature variations of the glass in this invention, description will briefly be made about the temperature variations of the glass in the existing system. When the molten glass is supplied onto the molding surface of the lower die in the glass supply step, the temperature of the lower part of the glass is rapidly lowered by heat exchange between the lower die kept at the temperature on the order of Tg - 50 °C and the lower part of the molten glass and is kept in an equilibrium at a level lower than the glass transition point Tg. On the other hand, the upper and the inner parts of the glass supplied onto the molding surface of the lower die are cooled by the atmospheric temperature around the glass to be gradually lowered in temperature. At this time, the temperature variation rate is high in the upper part of the glass as compared with the inner part of the glass. As a result, the difference in temperature between the inner and the upper parts of the glass is gradually increased before the start of the glass press step. In the glass press step, the upper die kept at the temperature around Tg - 100°C cools the upper and the lower parts of the glass gob. At this time, the upper part of the glass is brought into direct contact with the upper die and is therefore rapidly cooled to a temperature lower than the transition point Tg of the glass. On the other hand, the inner part of the glass is not rapidly cooled because the outer peripheral part of the glass is cooled down to a low temperature in advance and therefore increased in viscosity so that the internal heat is difficult to be released outward. This results in an increase in temperature difference between the inner part of the glass and each of the upper and the lower parts after the glass press step. Since the viscosity of the glass upon pressing is low, the heat shrinkage of the glass after pressing is great to produce the sink marks on the glass surface.

Next, description will be made about the temperature variations of the glass in this invention along the solid lines in Fig. 5. When the molten glass is supplied onto the molding surface of the lower die in the glass supply step, the temperature of the lower part of the glass is rapidly lowered by heat exchange between the lower die and the lower part of the molten glass and is kept in equilibrium at a level between Tg and Tg - 50 °C, i.e., not higher than the glass transition point Tg. On the other hand, the upper and the inner parts of the glass supplied onto the molding surface of the lower die are cooled by the atmospheric temperature around the glass and are gradually lowered in temperature. At this time, the temperature variation rate is high in the upper part of the glass as compared with the inner part of the glass. Up to this stage, the temperature variation in each part of the glass is similar to that in the existing system.

When the cool press step is carried out in this invention, the upper and the inner parts of the glass gob are cooled. In particular, the temperature drop in the upper part of the glass gob in direct contact with the press member is very rapid as compared with the temperature drop in the inner part. Next, by the three reheating steps intermittently carried out, the temperature of the glass gob, in particular, the temperature of the upper part thereof is elevated or kept at the temperature higher than the predetermined temperature (Tg). On the other hand, the temperature of the inner part of the glass is hardly affected by the heating in the reheating steps and is lowered along the temperature gradient given in the cool press step. Presumably, this is because the heat conductivity of the upper part of the glass is decreased as a result of the increase in viscosity of the upper part of the glass by the cool press step. As a consequence, the temperatures of the upper and the inner parts of the glass gradually approach each other so that the difference therebetween is minimized in the glass press step. The temperature of the lower part of the glass is increased by the temperature difference from the inner part of the glass and by heating in the reheating steps to be elevated towards the glass transition point Tg.

In the glass press step, the upper die cools the upper and the inner parts of the glass gob in the manner similar to the existing system. At this time, the upper part of the glass is brought into direct contact with the upper die kept at the temperature between Tg - 50 and Tg - 150 °C so that the upper part is rapidly cooled to a temperature lower than the transition point Tg. Since the outer peripheral part of the glass is cooled to a low temperature in advance and is increased in viscosity, the internal heat is difficult to be released outward. Therefore, the inner part of the glass is not rapidly cooled. However, since the temperature of the inner part upon pressing is relatively low as compared with the existing system, the temperature difference from the upper part of the glass after pressing is relatively small. In addition, the temperature of the lower part of the glass is elevated by the reheating steps to the temperature around Tg so that the temperature difference from the lower part of the glass is relatively small also. In this invention, the temperature difference between the inner and the upper parts of the glass is as relatively small as 50-100 °C. Therefore, even if the viscosity of the inner part of the glass is increased to 10^{3.5}-10^{6.5} poises (dPa·s), the viscosity of the upper part of the glass is not so increased as to lose the flowability. Therefore, it is possible to perform the pressing operation at an appropriate viscosity. As a consequence, occurrence of sink marks on the glass surface is suppressed and nonuniform distribution of sink marks is avoided. The viscosity of the inner part of the glass gob after subjected to the cool press step and the reheating steps reaches an appropriate level, i.e., between 10^{3.5}-10^{6.5} poises (dPa·s) in a short time as compared with the case where no such steps are carried out. This increases the productivity of the lens blank. The lens blank is taken out from the mold when temperatures of the upper, the inner, and the lower parts of the glass approach the transition point Tg through spontaneous cooling at the positions H through L in Fig. 1. Ideally, the lens blank is taken out from the mold when the temperature of each part is within a range of ±10 °C with respect to the transition point Tg. In Fig. 5, the temperature of the lower part of the glass in the glass press step is lower than the transition point Tg. However, the temperature may exceed the transition point Tg.

In the foregoing, one embodiment of this invention has been described in conjunction with the drawing. However, it will readily be understood that this invention is not restricted to the matters given in the embodiment but may be modified and improved in various other manners within a scope of the appended claims. In the foregoing embodiment, the cool press step and the three intermittent reheating steps are carried out in order to control the temperature of the glass so that the temperatures of the inner and the outer peripheral parts of the glass supplied onto the molding surface of the lower die are close to each other. However, the temperature control may be achieved in other manners. In the cool press step, the press member is brought into contact with the glass gob to cool the glass gob. Alternatively, the cooling can be achieved by lowering the atmospheric temperature around the upper part of the glass gob. In each of the reheating steps, the heating member may be brought into direct contact with the glass gob. In the embodiment, the reheating steps are intermittently carried out three times. However, the number of the reheating steps is not restricted at all. In addition, the reheating steps may be carried out continuously.

The method of press-molding a glass product according to this invention is applicable not only to manufacture of the optical lens blank described above but also to general glass products. In particular, it is very advantageous if this invention is applied to an optical lens having different thicknesses at the center and the peripheral part and to a glass product relatively thick.

As described above, in the press-molding method of a so-called direct press system, it is possible according to this invention to suppress occurrence of sink marks distributed on the surface of the lens blank and to prevent concentration of the sink marks to a local area. As a consequence, it is possible to provide the lens blank which will require a less grinding allowance to be removed in the grinding/polishing step so that the grinding scraps and the polishing scraps are reduced.

According to this invention, the viscosity of the glass can be brought to an optimum viscosity in a short time as compared with the existing system so that the productivity of the lens blank is improved.

## Claims

1. A method of press-molding a glass product by the use of a mold composed of an upper die and a lower die, each of said upper and said lower dies having a molding surface, said method comprising:
a supplying step of supplying a molten glass onto the molding surface of said lower die;
a temperature controlling step of controlling the temperature of said glass supplied onto the molding surface of said lower die so that an inner part of said glass and an outer peripheral part of said glass are close in temperature to each other; and
a pressing step of pressing said glass by the molding surfaces of said upper and said lower dies when said glass controlled in temperature has a viscosity within a range between 10^{3.5} and 10^{6.5} poises (dPa·s).

2. A method as claimed in claim 1, wherein:
said pressing step is carried out when said glass controlled in temperature has a viscosity within a range between 10^{4.5} and 10^{5.5} poises (dPa·s).

3. A method as claimed in claim 1, wherein:
said temperature controlling step makes the temperatures of the inner and the outer peripheral parts of said glass close to each other by lowering the temperature of the inner part of said glass and elevating the temperature of the outer peripheral part of said glass.

4. A method as claimed in claim 3, wherein:
lowering the temperature of the inner part of said glass and elevating the temperature of the outer peripheral part of said glass in said temperature controlling step are carried out so as to satisfy the condition that the temperature of the outer peripheral part of said glass is lower than that of the inner part of said glass.

5. A method as claimed in claim 1, wherein:
said temperature controlling step includes a cooling step of cooling said glass from the side of said upper die and a heating step of heating said glass from the side of said upper die after said cooling step.

6. A method as claimed in claim 5, wherein:
said cooling step includes the step of bringing a heat absorber into contact with an upper surface of said glass, which is faced to said upper die, for a predetermined time period to absorb the heat therefrom.

7. A method as claimed in claim 6, wherein:
said step of bringing said heat absorber into contact with the upper surface of said glass is a step of pressing said heat absorber against the upper surface of said glass for said predetermined time period under a preselected pressure.

8. A method as claimed in claim 6, wherein:
said step of bringing said heat absorber into contact with the upper surface of said glass is preceded by a step of keeping said heat absorber at an atmospheric temperature at a position remote from the neighborhood of said glass.

9. A method as claimed in claim 5, wherein:
said heating step includes the step of locating a heat source in the vicinity of an upper surface of said glass, which is faced to said upper die, for a predetermined time period.

10. A method as claimed in claim 1, wherein:
said pressing step is followed by the step of taking said glass out of said mold when the temperature of the inner part of said glass falls within a range between ±50 °C with respect to its transition point.

11. A method of producing a final glass product, said method comprising the step of grinding and polishing the surface of a glass molded by a press-molding method claimed in claim 10 to obtain said final glass product.

12. A method as claimed in claim 1, wherein:
a plurality of lower dies are transferred successively to operating positions for said supplying, said temperature controlling, and said pressing steps to carry out said supplying, said temperature controlling, and said pressing steps.

13. A method as claimed in claim 12, wherein:
said lower dies are again transferred successively to the operating positions for said supplying, said temperature-controlling, and said pressing steps to again carry out said supplying, said temperature controlling, and said pressing steps.

14. A method as claimed in claim 12, wherein:
said lower dies are arranged on a turntable in a circumferential direction and transferred by the rotation of said turntable successively to the operating positions for said supplying, said temperature controlling, and said pressing steps to carry out said supplying, said temperature controlling, and said pressing steps.

15. A method as claimed in claim 1, wherein:
said glass product is an optical lens material.

16. An apparatus for press-molding a glass product, said apparatus comprising:
a mold composed of an upper die and a lower die, each of said upper and said lower dies having a molding surface;
supplying means for supplying a molten glass onto the molding surface of said lower die;
temperature control means for controlling the temperature of said glass supplied onto the molding surface of said lower die so that an inner part of said glass and an outer peripheral part of said glass are close in temperature to each other; and
mold driving means for making the molding surfaces of said upper and said lower dies approach each other to press said glass;
said mold driving means being activated to press said glass when said glass controlled in temperature by said temperature controlling means has a viscosity within a range between 10^{3.5} and 10^{6.5} poises (dPa·s).

17. An apparatus as claimed in claim 16, wherein:
said temperature control means comprises cooling means for cooling said glass from the side of said upper die and heating means for heating said glass from the side of said upper die after cooling by said cooling means.

18. An apparatus as claimed in claim 17, wherein:
said apparatus further comprises conveying means for transferring said lower die with said glass supplied onto the molding surface thereof successively to positions where said cooling means, said heating means, and said mold driving means are installed, respectively.
